# EUROPÄISCHE PATENTSCHRIFT

(11) **EP 0 980 331 B1**
(45) Veröffentlichungstag und Bekanntmachung des Hinweises auf die Patenterteilung: **05.06.2002**
(21) Anmeldenummer: 97903562.3
(22) Anmeldetag: 11.03.1997
(51) Int. Cl.: B65D 23/02, B65D 25/14, B29C 45/14

(54) **ELASTISCH ZUSAMMENDRÜCKBARER BEHÄLTER SOWIE VERFAHREN ZUR HERSTELLUNG DESSELBEN**
RESILIENTLY COMPRESSIBLE CONTAINER AND METHOD OF PRODUCING THE SAME
CONTENANTS COMPRESSIBLES ELASTIQUEMENT ET LEUR PROCEDE DE FABRICATION

(43) Veröffentlichungstag der Anmeldung: 23.02.2000
(73) Patentinhaber: Hoffmann Neopac AG, 3602 Thun (CH)
(72) Erfinder: KREBS, Daniel, CH-3661 Uetendorf (CH); DUERRENFELD, Udo, CH-3661 Uetendorf (CH)
(74) Vertreter: Blum, Rudolf Emil Ernst
(86) Internationale Anmeldenummer: IB9700234
(87) Internationale Veröffentlichungsnummer: WO9840281

(56) Entgegenhaltungen:
- EP-A- 0 039 626
- EP-A- 0 244 256
- EP-A- 0 413 049
- WO-A-95/24301

## Beschreibung

Die vorliegende Erfindung betrifft einen elastisch zusammendrückbaren Behälter zur Aufnahme eines sauerstoffempfindlichen Inhaltes, welcher Behälter einen Behälterkörper und einen umlaufenden Wandabschnitt und einen mit demselben verbundenen, mindestens annähernd ebenflächigen Bodenabschnitt aufweist. Sie betrifft ferner ein Verfahren zur Herstellung eines solchen Behälters, bei welchem der Behälterkörper getrennt vom Bodenabschnitt hergestellt wird, der Bodenabschnitt in einer Spritzgiessform mit einer Giessformhöhlung hergestellt wird und danach der Bodenabschnitt und der Behälterkörper miteinander verbunden werden.

Elastisch zusammendrückbare Behälter werden insbesondere in solchen Fällen verwendet, wenn aus diesen genau dosierte Mengen des Inhalts abgegeben werden müssen. Beispielsweise, jedoch nicht abschliessend, wird der Inhalt tropfenweise abgegeben, wobei die Dosierung durch ein visuelles Zählen der Tropfen erfolgt. Als Beispiel sei eine medizinische Flüssigkeit wie Augentropfen genannt. Der Inhalt eines solchen als kleine Flasche ausgebildeten Behälters wird aus dem Behälter hinausbefördert, indem der Behälter durch Finger der menschlichen Hand zusammengedrückt wird. Zur Dosierung ist oft ein Nachfassen notwendig, d.h. der durch die Finger auf die Wand der Flasche ausgeübte Druck wird aufgehoben, so dass die eingedrückte Wand elastisch in ihre Ursprungsform zurückkehren kann, um damit ein erneutes Zusammendrücken für eine weitere Abgabe des Inhaltes zu ermöglichen.

Es gibt viele Stoffe, insbesondere solche medizinischer Art, die sauerstoffempfindlich sind. Das heisst, dass Sauerstoff einen qualitätsmindernden oder zerstörenden Einfluss auf den betreffenden Stoff ausübt. Um diesem Einfluss des Sauerstoffes zu begegnen, werden unter anderem Behälter, die z.B. aus dem Kunststoff PE hergestellt sind, relativ dickwandig ausgebildet. Dickwandige Behälter, bzw. Flaschen weisen jedoch den Nachteil auf, dass ihre Wände relativ unelastisch sind. Das heisst, dass sich die Wände, nachdem sie zur Abgabe einiger Tropfen des Inhaltes zusammengedrückt worden sind und der von den Fingern des Benützers ausgeübte Druck aufgehoben wird, nur sehr langsam zu ihrer Ursprungsform zurückverformen.

Es ist wohl bekannt, bei Tuben z.B. für Zahnpasta ein Laminat mit einer Al-Schicht zu verwenden. Jedoch sind keine elastisch zusammedrückbare Behälter mit einem ebenflächigen Bodenabschnitt bekannt, die eine als O₂-Barriere dienende Al-Schicht aufweisen.

Ziel der Erfindung ist, die genannten Nachteile zu beheben und einen elastisch zusammendrückbaren Behälter zur Aufnahme eines sauerstoffempfindlichen Inhaltes zu zeigen, der allseits eine als O₂-Barriere dienende, Al-enthaltende Laminat-Schicht aufweist.

Der erfindungsgemässe, elastisch zusammendrückbare Behälter ist erfindungsgemäss dadurch gekennzeichnet, dass der Wandabschnitt und der Bodenabschnitt eine erste Schicht aus einem Kunststoff und eine Aluminium enthaltende zweite Schicht aufweisen, und dass der Kunststoff des Wandabschnittes mit dem Kunststoff des Bodenabschnittes verschweisst ist, und die Aluminium enthaltende zweite Schicht des Wandabschnittes mit der Aluminium enthaltenden ersten Schicht des Bodenabschnittes verschweisst ist.

Gemäss einer vorteilhaften Ausführung besteht die erste Schicht des Wandabschnittes und des Bodenabschnittes aus Aluminium,
und gemäss einer weiteren vorteilhaften Ausführung bildet die erste Schicht jeweils die Aussenschicht des Wandabschnittes, bzw. des Bodenabschnittes, und die zweite Schicht jeweils die Innenschicht des Wandabschnittes, bzw. des Bodenabschnittes.

Das Verfahren zur Herstellung des Behälters, bei welchem der Behälterkörper getrennt vom Bodenabschnitt hergestellt wird, der Bodenabschnitt in einer Spritzgiessform mit einer Giessformhöhlung hergestellt wird und danach der Bodenabschnitt und der Behälterkörper miteinander verbunden werden, ist dadurch gekennzeichnet, dass eine aus einem Aluminium enthaltenden Material bestehende Rondelle in der Giessformhöhlung angeordnet wird, dass dadurch der Kunststoff in die Giessform und auf die Rondelle spritzgegossen wird, so dass die Rondelle aufgrund des auf sie einwirkenden Druckes des eingespritzten Kunststoffes in der Giessformhöhlung tiefgezogen wird und sich mit dem eingespritzten Kunststoff verbindet, und dass danach der Bodenabschnitt entformt und mit dem Behälterkörper verbunden wird.

Nach einer weiteren vorteilhaften Ausführung wird der Bodenabschnitt mit den Behälterkörper verbunden, indem der Bodenabschnitt auf den Behälterkörper plaziert und bei der Berührungsstelle der Schichten ein hochfrequenter elektrischer Strom angelegt wird um ein Hochfrequenzschweissen der aus einem Aluminium enthaltenden Material bestehenden Schichten durchzuführen, wobei durch die erhöhte Temperatur der aus einem Aluminium enthaltenden Material bestehenden Schichten der Kunststoff in einen schmelzflüssigen Zustand versetzt wird, so dass auch die Kunststoffschichten zusammenschmelzen.

Eine zur Durchführung des Verfahrens dienende bevorzugte Spritzgiessvorrichtung ist gekennzeichnet durch eine als Tiefziehgesenk ausgebildete Giessformhöhlung, welche Giessformhöhlung einen umlaufenden Innenwandabschnitt aufweist, da zum geklemmten Festhalten und damit Fixieren der tiefzuziehenden Rondelle ausgebildet ist.

Nachfolgend wird der Erfindungsgegenstand anhand der Zeichnungen beispielsweise näher erläutert. Es zeigt:
Fig. 1 einen Behälter mit einer Ausgusstülle, teilweise im Schnitt gezeichnet,
Fig. 2 schematisch Teile einer Spritzgussform,
Fig. 3 in vergrössertem Massstab das Detail A der Fig. 2 mit eingelegter Rondelle,
Fig. 4 in vergrössertem Massstab das Detail der Fig. 2, mit einem Kantenbereich eines fertiggestellten Bodenabschnittes,
Fig. 5 vereinfacht eine Ansicht auf einen Teil einer Hochfrequenzschweisseinrichtung, und
Fig. 6 einen Schnitt entlang der Linie V-V der Fig. 4 .

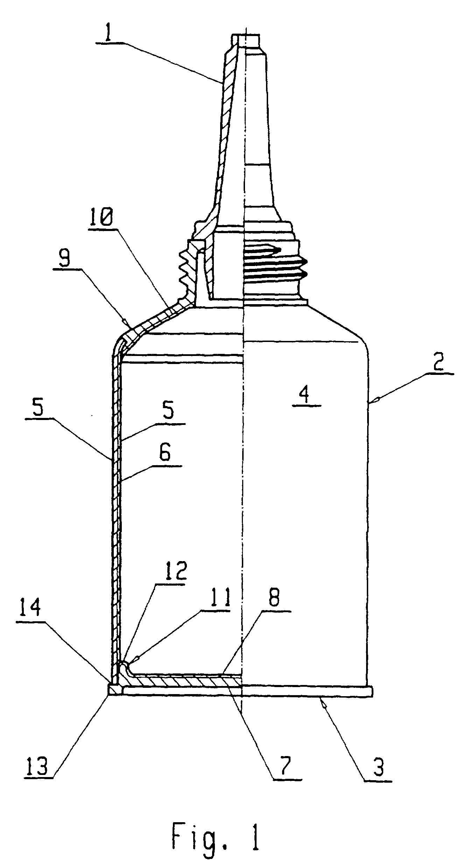

Der in der Fig. 1 gezeigte Behälter in Form einer Laminat-Flasche ist beispielsweise zur Aufnahme von Augentropfen bestimmt. Eine praktische Ausführung derselben weist z.B. eine Gesamthöhe von ca. 8 cm und einen Durchmesser von ca. 3 cm auf.

Der Behälter weist bei dieser Ausführung eine als Tropfenzähler verwendbare Ausgusshülle 1 auf. Offensichtlich können auch anders ausgebildete Ausgüsse vorhanden sein, wie dies dem Fachmann bekannt ist.

Allgemein weist der Behälter einen Behälterkörper 4 mit einem Wandabschnitt 2 und einen Bodenabschnitt 3 auf. Der Wandabschnitt 2 besteht dabei aus einem Laminat mit einer äusseren Kunststoffschicht 5, z.B. aus PE (Polyethylen), und einer inneren aus Aluminium, oder zumindest einem Aluminium enthaltenden Material bestehenden Schicht 6. Der Bodenabschnitt 3 besteht in derselben Weise aus einer äusseren Kunststoffschicht 7, z.B. aus PE, und einer inneren aus Aluminium, oder zumindest einem Aluminium enthaltenden Material bestehenden Schicht 8.

Beim Bereich der Ausgussöffnung, beim Deckabschnitt 9 des Behälterkörpers 4, ist an der Innenseite der Kunststoffschicht des Behälterkörpers 4 ein Deckeleinsatz 10 aus einem Aluminium enthaltenden Material oder aus Aluminium angeordnet.

Der untere Randbereich des Deckeleinsatzes 10 überlappt den oberen Randbereich der Al-Schicht 6 des Wandabschnittes 2. Zwischen dem Deckeleinsatz 10 und der Al-Schicht 6 ist Kunststoff vorhanden.

Beim Bereich des Bodenabschnittes 3 endet der Wandabschnitt 2 stumpf.

Der Bodenabschnitt 3 weist einen wulstförmigen, in den Behälterinnenraum vorspringenden Umfangsabschnitt 11 auf. Der Al-Schichtabschnitt beim Aussenumfangsbereich des wulstförmigen Umfangsabschnittes 11 ist mit der Al-Schicht 6 des Wandabschnittes 2 verschweisst, wobei diese Al-Schweissstelle mit der Bezugsziffer 12 angedeutet ist.

Die Kunststoffschicht 7 des Bodenabschnittes 3 weist einen hervorstehenden Umfangsrand 13 auf. Entsprechend ist die Kunststoffschicht 7 des Bodenabschnittes 3 mit der Kunststoffschicht 5 des Wandabschnittes 2 verschweisst, wobei die Kunststoff-Schweissstelle mit der Bezugsziffer 14 angedeutet ist.

Es ist somit ersichtlich, dass die gesamte Innenseite des flaschenförmigen Behälters von einer Al-Schicht überdeckt ist, wobei insbesondere der Übergangsbereich zwischen dem Wandabschnitt 2 und dem Bodenabschnitt 3 an keiner Stelle einen Unterbruch der Al-Schicht aufweist. Weil nun der Behälter als Laminat aus Kunststoff und Al als O₂-Barriere besteht, kann seine Wandstärke derart klein gewählt werden, dass seine Wand, nachdem sie einmal zur beispielsweisen tropfenförmigen Abgabe zusammengedrückt worden ist, sehr schnell aufgrund ihrer elastischen Rückstellkräfte zur ursprünglichen Form zurückkehrt und unverzüglich zur weiteren Abgabe des Inhaltes wieder elastisch zusammengedrückt werden kann.

Zur Herstellung des Behälters wird der Behälterkörper 4 mit dem Wandabschnitt 2 separat vom Bodenabschnitt 3 hergestellt. Beim aus den zwei Schichten 5,6 bestehenden Wandabschnitt 2 wird Al auf den Kunststoff aufgespritzt.

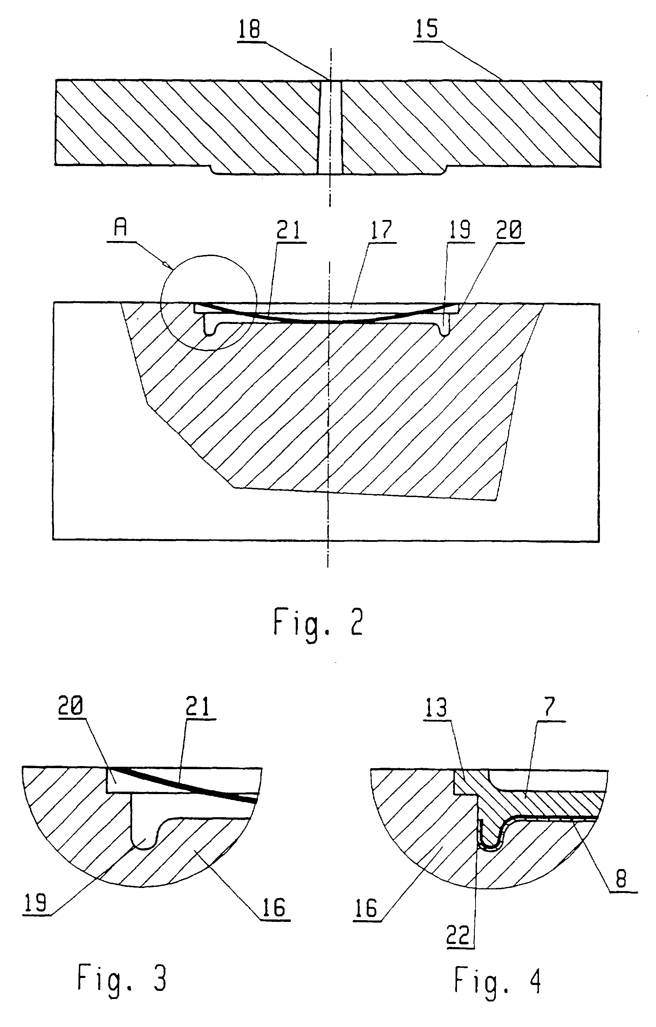

Der Bodenabschnitt 3 wird in einem Spritzgiessverfahren kombiniert mit einem Tiefziehverfahren hergestellt. Es wird auf die Figuren 2-4 hingewiesen.

Figur 2 zeigt schematisch und vereinfacht eine Spritzgiessform mit einem Oberkasten 15 und einem Unterkasten 16. Im Unterkasten 16 ist eine Giessformhöhlung 17 ausgebildet. Beim Oberkasten 15 ist schematisch eine Einspritzdüse 18 eingezeichnet. Zum Spritzgiessen wird der Oberkasten 15 mit dem Unterkasten 16 zur flächigen Berührung gebracht, der jeweilige Kunststoff durch die Einspritzdüse 18 in die Giessformhöhlung 17 eingespritzt und zum Entformen der Oberkasten 15 wieder vom Unterkasten 16 entfernt. Diese Vorgänge sind allgemein bekannt und bedürfen keiner weiteren Erläuterung. Ebenfalls bekannt sind die entsprechenden Steuerungen, Betätigungsorgane, Leitungen, etc.

Die Kontur der Giessformhöhlung 17 entspricht der Kontur des herzustellenden Bodenabschnittes 3. Der Ringraumteil 19 der Giessformhöhlung 17 entspricht dem wulstförmigen Umfangsabschnitt 11 des Bodenabschnittes 3 und der Ringraumteil 20 der Giessformhöhlung 17 entspricht dem Umfangsrand 13 des Bodenabschnittes 3.

Der Bodenabschnitt 3, der aus einer Kunststoffschicht und einer Al (enthaltenden) Schicht besteht, wird in einem einzigen Arbeitsvorgang hergestellt, wobei die Giessformhöhlung für den Kunststoff und als Tiefziehgesenk für eine Al-Rondelle 21 dient.

Im ebenflächigen Zustand weist die Rondelle 21 einen Durchmesser auf, der grösser als der grösste Durchmesser der Giessformhöhlung 17 ist. Die Rondelle 21 wird vorerst in der in der Figur 2 gezeigten Form in die Giessformhöhlung 17 eingesetzt. Es ist ersichtlich, dass die Rondelle 21 in einem elastisch verformten, ausgewölbten Zustand in der Giessformhöhlung 17 festgeklemmt und damit einwandfrei zentriert ist. Danach wird die Giessform geschlossen, indem Oberkasten 15 und Unterkasten 16 gegeneinander bewegt werden und schliesslich wird durch die Einspritzdüse 18 der Kunststoff unter Druck eingespritzt. Durch den Druck des Kunststoffes wird die Rondelle 21 tiefgezogen, wobei der auf die Rondelle 21 einwirkende Kunststoff sowohl als Niederhalter als auch Tiefziehstempel gemäss der bekannten Tiefziehtechnik wirkt.

Nach Beendigung des Spritzgiess/Tiefzieh-Vorganges ist der Bodenabschnitt 3 gebildet, von welchem in der Figur 4 ein Teil des Umfangrandbereiches im Schnitt gezeichnet ist. Es ist ersichtlich, dass ein zweischichtiger Körper vorliegt, der nun gemäss der Fig. 1 von unten in den Behälterkörper 4 eingesetzt werden kann. Ist der Bodenabschnitt 3 im Behälterkörper 4 eingesetzt, berührt der Aussenumfangsabschnitt 22 (Fig. 4) der Al-Schicht 8 des Bodenabschnittes 3 die Al-Schicht 6 des Behälterkörpers 4. Die Kunststoffschicht 5 des Behälterkörpers 4 endet stumpf auf dem vorstehenden Umfangsrandabschnitt 13 des Bodenabschnittes 3.

Nun kann der Bodenabschnitt 3 mit dem Behälterkörper 4 verbunden werden.

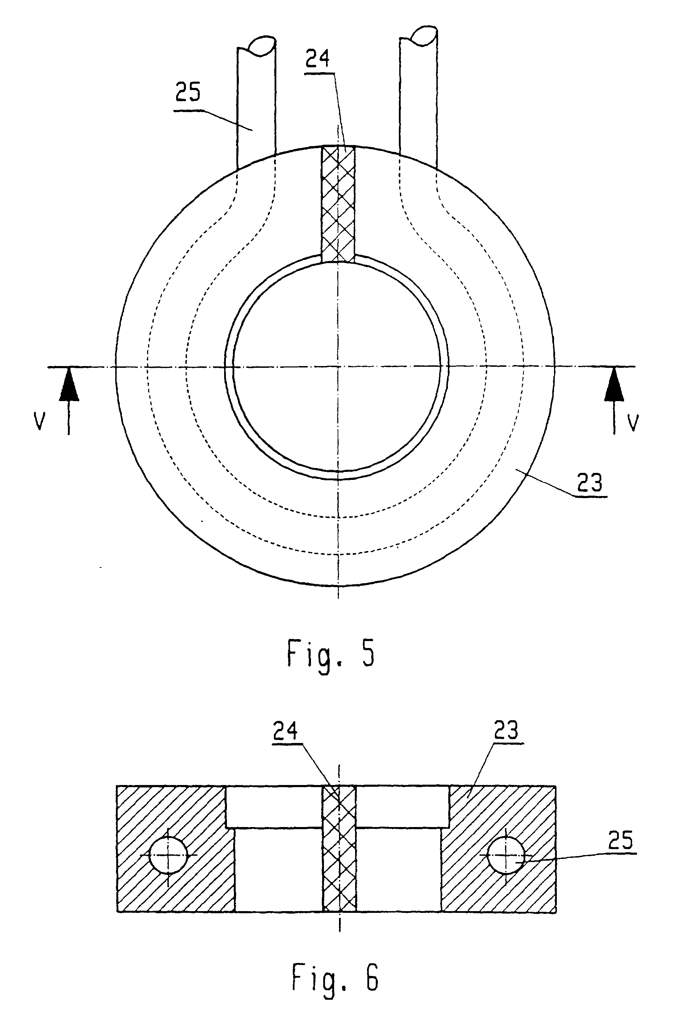

In der Fig. 5 und 6 ist schematisch eine Vorrichtung zum Hochfrequenzschweissen dargestellt. Sie weist einen offenen Ringkörper 23 aus einem magnetisierbaren Material auf, in welchem bei einer Trennstelle ein Isolierstück 24 eingesetzt ist. Durch den Ringkörper 23 verläuft ein wassergekühlter Stromleiter 25. Um den Bodenabschnitt 3 mit dem Behälterkörper 4 zu verbinden, wird der Behälterkörper 4 mit dem eingesetzten Bodenabschnitt 3 in den Ringkörper 23 hineingestellt und der Ringkörper 23 mit hochfrequentem elektrischen Strom erregt. Folglich werden die sich berührenden Al-Schichten des Bodenabschnittes 3 und des Behälterkörpers 4 insbesondere bei ihren Berührungsstellen schmelzflüssig und schweissen zusammen gemäss den bekannten Vorgängen des Hochfrequenzschweissens. Dadurch, dass das Al eine erhöhte Temperatur einnimmt, werden auch die Kunststoffschichten so weit schmelzflüssig, dass auch diese miteinander verschmelzen. Um ein einwandfreies Verschmelzen des Kunststoffes sicherzustellen, und einem Schwinden entgegenzuwirken, wird von oben her ein Druck auf den Behälterkörper 4 ausgeübt, so dass der untere Rand des Wandabschnittes 2 mit Druck gegen den Umfangsrand 13 des Bodenabschnittes 3 gedrückt wird.

## Patentansprüche

1. Elastisch zusammendrückbarer Behälter zur Aufnahme eines sauerstoffempfindlichen Inhaltes, welcher Behälter einen Behälterkörper (4) mit einem umlaufenden Wandabschnitt (2) und einen mit demselben verbundenen, mindestens annähernd ebenflächigen Bodenabschnitt (3) aufweist, **dadurch gekennzeichnet, dass** der Wandabschnitt (2) und der Bodenabschnitt (3) eine erste Schicht (5;7) aus einem Kunststoff und eine Aluminium enthaltende zweite Schicht (6;8) aufweisen, und dass der Kunststoff des Wandabschnittes (2) mit dem Kunststoff des Bodenabschnittes (3) verschweisst ist, und die Aluminium enthaltende zweite Schicht (6) des Wandabschnittes (2) mit der Aluminium enthaltenden ersten Schicht (8) des Bodenabschnittes (3) verschweisst ist.

2. Behälter nach Anspruch 1, **dadurch gekennzeichnet, dass** die erste Schicht (5;7) des Wandabschnittes (2) und des Bodenabschnittes (3) aus Aluminium besteht.

3. Behälter nach Anspruch 1, **dadurch gekennzeichnet, dass** die erste Schicht (5;7) jeweils die Aussenschicht des Wandabschnittes (2), bzw. des Bodenabschnittes (3) bildet, und die zweite Schicht (6;8) jeweils die Innenschicht des Wandabschnittes (2), bzw. des Bodenabschnittes (3) bildet.

4. Behälter nach Anspruch 1, **dadurch gekennzeichnet, dass** der Bodenabschnitt (3) einen wulstförmigen, in den Behälterinnenraum vorspringenden Umfangsabschnitt (11) aufweist, und dass der Aluminium enthaltende Schichtabschnitt des Aussenumfangbereiches (22) des wulstförmig vorspringenden Umfangsabschnittes (11) mit dem anliegenden Aluminium enthaltenden Schichtabschnitt des Wandabschnittes (2) verschweisst ist.

5. Verfahren zur Herstellung des Behälters nach Anspruch 1, bei welchem der Behälterkörper (4) mit dem Wandabschnitt (2)getrennt vom Bodenabschnitt (3) hergestellt wird, der Bodenabschnitt (3) in einer Spritzgiessform (15;16) mit einer Giessformhöhlung (17) hergestellt wird und danach der Bodenabschnitt (3) mit dem Wandabschnitt (2) des Behälterkörpers (4) verbunden wird, wobei der Kunststoff (7) des Bodenabschnittes (3) mit einer Kunststoffschicht (5) des Behälterkörpers (4) und die Aluminium enthaltende Schicht (8) des Bodenabschnittes (3) mit einer Aluminium enthaltenden Schicht (6) des Behälterkörpers (4) verbunden werden, **dadurch gekennzeichnet, dass** eine, aus einem Aluminium enthaltenden Material bestehende Rondelle (21) in der Giessformhöhlung (17) angeordnet wird, dass danach der Kunststoff in die Giessform und auf die Rondelle (21) spritzgegossen wird, so dass die Rondelle (21) aufgrund des auf sie einwirkenden Druckes des eingespritzten Kunststoffes in der Giessformhöhlung (17) tiefgezogen wird und sich mit dem eingespritzten Kunststoff verbindet, und dass danach der Bodenabschnitt (3) entformt und mit dem Behälterkörper verbunden wird.

6. Verfahren nach Anspruch 5, **dadurch gekennzeichnet, dass** eine Rondelle (21) mit einem Durchmesser gewählt wird, der grösser als der Durchmesser der Giessformhöhlung ist, und dass die Rondelle (21) vor dem Spritzgiessen in einem elastisch verformten, ausgewölbten Zustand in der Giessformhöhlung (17) zum Zentrieren derselben festgeklemmt wird.

7. Verfahren nach Anspruch 5, **dadurch gekennzeichnet, dass** der Bodenabschnitt (3) mit dem Wandabschnitt (2) des Behälterkörpers (4) verbunden wird, indem der Bodenabschnitt (3) auf den Wandabschnitt (2) des Behälterkörpers (4) plaziert und bei der Berührungsstelle der Schichten ein hochfrequenter Strom angelegt wird um ein Hochfrequenzschweissen der aus einem Aluminium enthaltenden Material bestehenden Schichten durchzuführen, wobei durch die erhöhte Temperatur der aus einem Aluminium enthaltenden Material bestehenden Schichten der Kunststoff in einen schmelzflüssigen Zustand versetzt wird, so dass auch die Kunststoffschichten zusammenschmelzen.

8. Verfahren zur Herstellung des Behälters nach Anspruch 1, **dadurch gekennzeichnet, dass** der Behälterkörper (4) mit dem Wandabschnitt (2) getrennt vom Bodenabschnitt (3) hergestellt wird, der Wandabschnitt (2) des Behälterkörpers (4) und der Bodenabschnitt (3) als Laminate mit einer Kunststoffschicht und einer Schicht aus einem Aluminium enthaltenden Material vorliegen, dass der Bodenabschnitt (3) auf den Wandabschnitt (2) des Behälterkörpers (4) plaziert und bei der Berührungsstelle der Schichten ein hochfrequenter elektrischer Strom angelegt wird, um ein Hochfrequenzschweissen der aus einem Aluminium enthaltenden Material bestehenden Schichten durchzuführen, wobei durch die erhöhte Temperatur der aus einem Aluminium enthaltenden Material bestehenden Schichten der Kunststoff in einen schmelzflüssigen Zustand versetzt wird, so dass auch die Kunststoffschichten zusammenschmelzen.

## Claims

1. Resiliently compressible container for the receipt of oxygen sensitive contents, which container includes a container body (4) with a circumferential wall section (2) and a at least approximately planar base section (3) connected to same, **characterized in that** the wall section (2) and the base section (3) comprise a first layer (5; 7) of a plastics material and a second layer (6; 8) containing aluminum, and that the plastics material of the wall section (2) is fused to the plastics material of the base section (3), and the aluminum containing section layer (6) of the wall section (2) is fused to the aluminum containing first layer (8) of the base section (3).

2. Container according to claim 1, **characterized in that** the first layer (5; 7) of the wall section (2) and of the base section (3) consists of aluminum.

3. Container according to claim 1, **characterized in that** the first layer (5; 7) forms the outer layer of the wall section (2), respectively of the base section (3), and the second layer (6; 8) forms the inner layer of the wall section (2), respectively of the base section (3).

4. Container according to claim 1, **characterized in that** the base section (3) comprises a bead shaped peripheral section (11) projecting into the inner space of the container, and that the layer section of the outer peripheral section (22) of the aluminum containing bead shaped projecting peripheral section (11) is fused to the adjacent aluminum containing layer section of the wall section (2).

5. Method of producing the container according to claim 1, in which the container body (4) with the wall section (2) is produced separately from the base section (3), the base section (3) is produced in a injection molding form (15; 16) with a molding form cavity (17) and the base section (3) is thereafter connected to the wall section (2) of the container body (4), whereby the plastics material (7) of the base section (3) is connected to a plastics material layer (5) of the container body (4) and the aluminum containing layer of the base section (3) is connected to a aluminum containing layer (6) of the container body (4), **characterized in that** a disk (21) consisting of a material which contains aluminum is placed in the molding form cavity (17), that thereafter the plastics material is injection molded into the molding form and onto the disk (21), so that the disk (21) is deep drawn in the molding form cavity (17) due to the pressure of the injected plastics material and fuses with the injected plastics material, and that thereafter the base section (3) is removed from the mold and connected to the container body.

6. Method according to claim 5, **characterized in that** a disk (21) with a diameter is selected which is larger than the diameter of the molding form cavity, and that the disk (21) is clamped prior to the injection molding in an elastically deformed, domed state in the molding form cavity (17) for a centering of same.

7. Method according to claim 5, **characterized in that** the base section (3) is connected to the wall section (2) of the container body (4) **in that** the base section (3) is placed onto the wall section (2) of the container body (4) and a high frequency current is applied at the area of contact of the layers in order to carry out a high frequency welding of the layers consisting at a material which contains aluminum, whereby the plastic material is brought into a flowable melted state by the increased temperature of the layers consisting of a material which contains aluminum, so that also the plastic material layers are fused together.

8. Method of producing the container according to claim 1, **characterized in that** the container body (4) with the wall section (2) is produced separate from the base section (3), the wall section (2) of the container body (4) and the base section (3) being provided as laminates with a plastics material layer and a layer of a material which contains aluminum, that the base section (3) is placed onto the wall section (2) of the container body (4) and a high frequency current is applied at the area of contact of the layers in order to carry out a high frequency welding of the layers consisting of a material which contains aluminum, whereby the plastics material is brought into a flowable melted state by the increased temperature of the layers consisting of a material which contains aluminum, so that also the plastics material layers are fused together.

## Revendications

1. Récipient compressible élastiquement pour recevoir un contenu sensible à l'oxygène, lequel récipient présente un corps (4) de récipient avec une section de paroi (2) périphérique et une section de fond (3) à surface au moins approximativement plane reliée à celle-ci, **caractérisé en ce que** la section de paroi (2) et la section de fond (3) présentent une première couche (5, 7) en matière synthétique et une deuxième couche (6, 8) contenant de l'aluminium et **en ce que** la matière synthétique de la section de paroi (2) est soudée avec la matière synthétique de la section de fond (3) et la deuxième couche (6) de la section de paroi (2) contenant de l'aluminium est soudée avec la première couche (8) de la section de fond (3) contenant de l'aluminium.

2. Récipient selon la revendication 1, **caractérisé en ce que** la première couche (5, 7) de la section de paroi (2) et de la section de fond (3) est constituée d'aluminium.

3. Récipient selon la revendication 1, **caractérisé en ce que** la première couche (5, 7) forme chaque fois la couche extérieure de la section de paroi (2) ou de la section de fond (3) et la deuxième couche (6, 8) forme chaque fois la couche intérieure de la section de paroi (2) ou de la section de fond (3).

4. Récipient selon la revendication 1, **caractérisé en ce que** la section de fond (3) présente une section périphérique (11) en forme de bourrelet faisant saillie à l'intérieur du récipient et **en ce que** la section de la couche contenant de l'aluminium de la région périphérique extérieure (22) de la section périphérique (11) faisant saillie en forme de bourrelet est soudée avec la section adjacente de la couche contenant de l'aluminium de la section de paroi (2).

5. Procédé pour la fabrication du récipient selon la revendication 1, dans lequel le corps (4) du récipient est fabriqué avec la section de paroi (2) séparée de la section de fond (3), la section de fond (3) est fabriquée dans un moule à injection (15, 16) ayant une cavité (17) de moule et la section de fond (3) est ensuite reliée à la section de paroi (2) du corps (4) du récipient, la matière synthétique (7) de la section de fond (3) étant reliée à une couche (5) de matière synthétique du corps (4) du récipient et la couche (8) de la section de fond (3) contenant de l'aluminium étant reliée à une couche (6) du corps (4) du récipient contenant de l'aluminium, **caractérisé en ce que** une rondelle (21) constituée d'un matériau contenant de l'aluminium est disposée dans la cavité (17) du moule, **en ce que** la matière synthétique est ensuite injectée dans le moule et sur la rondelle (21) de sorte que la rondelle, (21) en raison de la pression exercée sur elle par la matière synthétique injectée dans la cavité (17) du moule, est tirée en profondeur et s'associe à la matière synthétique injectée et **en ce que** la section de fond (3) est ensuite démoulée et reliée au corps du récipient.

6. Procédé selon la revendication 5, **caractérisé en ce que** une rondelle (21) ayant un diamètre qui est plus grand que le diamètre de la cavité du moule est choisie et **en ce que** la rondelle (21) est bloquée, avant le moulage par injection, dans un état déformé élastiquement et bombé, dans la cavité (17) du moule pour y être centrée.

7. Procédé selon la revendication 5, **caractérisé en ce que** la section de fond (3) est reliée à la section de paroi (2) du corps (4) du récipient, en ce sens que la section de fond (3) est placée sur la section de paroi (2) du corps (4) du récipient et un courant à haute fréquence est appliqué au point de contact des couches pour effectuer un soudage à haute fréquence des couches constituées d'un matériau contenant de l'aluminium, la matière synthétique étant amenée à un état en fusion grâce à la température accrue des couches constituées d'un matériau contenant de l'aluminium de sorte que les couches de matière synthétique s'unissent en fondant.

8. Procédé pour la fabrication du récipient selon la revendication 1, **caractérisé en ce que** le corps (4) du récipient est fabriqué avec la section de paroi (2) séparée de la section de fond (3), la section de paroi (2) du corps (4) du récipient et la section de fond (3) se présentent comme des laminés avec une couche en matière synthétique et une couche de matériau contenant de l'aluminium, **en ce que** la section de fond (3) est placée sur la section de paroi (2) du corps (4) du récipient et un courant à haute fréquence est appliqué au point de contact des couches pour effectuer un soudage à haute fréquence des couches constituées d'un matériau contenant de l'aluminium, la matière synthétique étant amenée à un état en fusion grâce à la température accrue des couches constituées d'un matériau contenant de l'aluminium de sorte que les couches de matière synthétique s'unissent en fondant.
